# EUROPEAN PATENT SPECIFICATION

(11) **EP 0 545 417 B1**
(45) Date of publication and mention of the grant of the patent: **14.04.1999**
(21) Application number: 92120669.4
(22) Date of filing: 03.12.1992
(51) Int. Cl.: C08G 61/12

(54) **Water-soluble conducting polymer and method for production thereof**
Wasserlösliches leitfähiges Polymer und Verfahren zu seiner Herstellung
Polymère conducteur soluble dans l'eau et méthode pour le préparer

(30) Priority: 04.12.1991 JP 348295/91; 24.11.1992 JP 336672/92
(43) Date of publication of application: 09.06.1993
(73) Proprietor: SHOWA DENKO KABUSHIKI KAISHA, Minato-ku, Tokyo (JP)
(72) Inventor: Ichikawa, Reiko, c/o Central Research Laboratory, Ota-ku, Tokyo (JP); Ikenoue, Yoshiaki, c/o Central Research Laboratory, Ota-ku, Tokyo (JP)
(74) Representative: Strehl Schübel-Hopf & Partner

(56) References cited:
- EP-A- 0 164 974
- EP-A- 0 273 643
- EP-A- 0 399 463
- POLYMER BULLETIN vol. 18, 1987, HEIDELBERG DE pages 277 - 281 E.E.HAVINGA ET AL. 'Self-doped water-soluble conducting polymers'

## Description

### 1. Field of the Invention

The present invention relates to a novel conducting polymer having a high stability and exhibiting high solubility to water and also relates to a method for the production of the polymer. More specifically, the present invention relates to a novel water-soluble conducting polymer particularly suitable for use as electrodes, sensors, electronic display elements, nonlinear optical elements, photoelectric conversion elements, antistatic agents, conducting materials, and optical materials which require high workability in the field of electric and electronic industry and a method for the production of the polymer.

### 2. Description of the Related Art

Polymers of an advanced π electron conjugate system have attracted attention in industries concerned owing to their characteristics such as not only conductivity but also behavior manifested in the change of state during the metal/semiconductor transition. Thus, studies have been made with a view to developing these polymers fit for varying applications. Among other polymers of this class, water-soluble self-doping conjugate type polymers which are obtained by having a Brönsted acid group joined to the main chain of polymer by covalent bond either directly or indirectly with the aid of a spacer have arrested a particular interest in respect that they possess stable conductivity over a long period without needing contribution of any external dopant.

As specifical examples of such polymers reported in the prior art, F. Wudl et al.'s and E. E. Havinga et al.'s polythiophene derivatives having a sulfoalkyl group ("Journal of American Chemical Society," vol. 109, page 1858, 1987 and "Polymer Bulletin," vol. 18, page 277, 1987, respectively), Aldissi's polythiophene and polypyrrole derivatives (U.S. Patent No. 4,880,508), polyaniline derivative having a carboxy group as a substituent covalently bonded to an aromatic ring (WO 87/05914), polypyrrole derivatives having a sulfopropyl group substituted at the N position ("Journal of Chemical Society, Chemical Communication," page 621, 1987), polyaniline derivatives having a sulfopropyl group substituted at the N position ("Journal of Chemical Society, Chemical Communication," page 180, 1990 and "Synthetic Metals," vol. 31, page 369, 1989), and polyaniline derivatives having a sulfonic acid group directly substituted at an aromatic ring ("Journal of American Chemical Society," vol. 112, page 2800, 1990) may be cited.

As a specifical example of bicyclic conducting polymers polyisothianaphthenes are disclosed in conjunction with a method for the production thereof in J. Org. Chem., 49, 3382 (1984). They are known to possess a stable conductivity as evinced by an extremely small energy gap of 1.1 eV. However, polyisothianaphthene is neither soluble nor fusible and is extremely deficient in moldability. A method for rendering this particular polymer soluble in an organic solvent by introducing an alkyl group or alkoxy group into the polymer has been disclosed in Japanese Unexamined Patent Publication (Kokai) No. 02-242816).

The thought that the conductivity of such isothianaphthene polymers is further influenced by introducing an electron attracting or donating group into the isothianaphthene backbone has been reported in conjunction with the results of calculation by Bredas et al. in J. Chem. Phys., 85(8), 4673 (1986). As examples of the polymers relating to such isothianaphthene polymers, polymers having a halogen as a substituent as disclosed in Japanese Unexamined Patent Publication (Kokai) No. 63-307604 and polymeric compounds possessing an isothianaphthene backbone having an electron attracting group as a substituent as described in Japanese Unexamined Patent Publication (Kokai) No. 02-252727 may be cited. Neither of these patent publications has any concrete mention of the polymer of the present invention nor of a method for the production of such a polymer.

Bicyclic water-soluble conducting polymers, having isothianaphthenylene, isobenzofurylene, isoindolylene, isobenzoselenylene, or isobenzotellurylene structure as a repeating unit thereof, have never been disclosed to the art to date.

### SUMMARY OF THE INVENTION

Accordingly, the objects of the present invention are to eliminate the above-mentioned disadvantages of the prior art and to provide a practical and novel bicyclic water-soluble conducting polymer derived from a known compound by the use of a sulfonating agent, a method for the production thereof and a processed article thereof.

Other objects and advantages of the present invention will be apparent from the following description.

In accordance with the present invention, there is provided a novel water-soluble conducting polymer having a chemical structure represented by the formula (I): 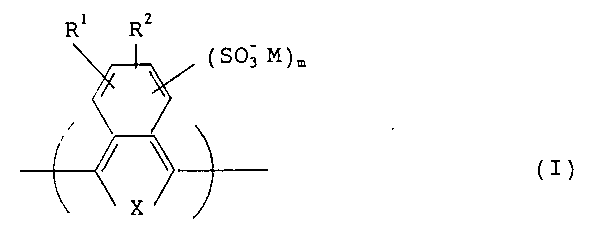 wherein R¹ and R² independently represent H, a linear or branched alkyl or alkoxy group having 1 to 20 carbon atoms, a primary, secondary or tertiary amino group, a trihalomethyl group, a phenyl group or a substituted phenyl group, X represents S, O, Se, Te or NR³, R³ represents H, a linear or branched alkyl group having 1 to 6 carbon atoms or a substituted or unsubstituted aryl group, and wherein the chain in the alkyl group of R¹, R² or R³ or in the alkoxy group of R¹ or R² optionally contains a carbonyl, ether or amide bond, M represents H⁺, an alkali metal ion selected from the group of Na⁺, Li⁺ or K⁺ or a quaternary ammoniumcation, and m represents a numerical value in the range between 0.2 and 2.

In accordance with the present invention, there is also provided a novel water-soluble conducting polymer having a chemical structure represented by the formula (II): 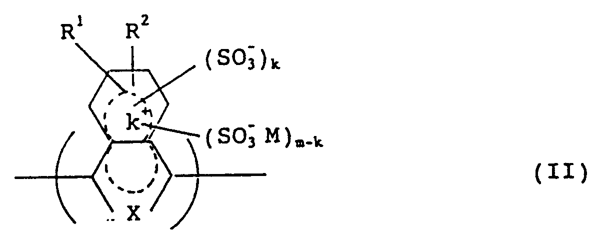 wherein R¹, R², X, R³, M, and m have the same meanings as defined above with respect to the formula (I) and k is a numerical value smaller than that of m and/or the formula (III): 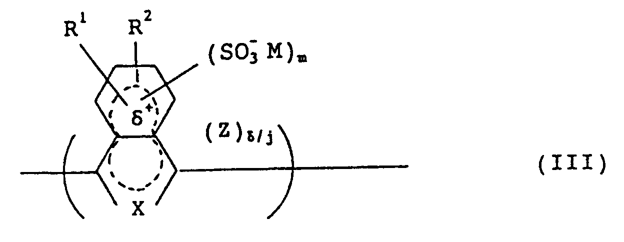 wherein R¹, R², X, R³, M, and m have the same meanings as defined above with respect to the formula (I), δ is a numerical value not more than 0.7, Z represents an anion, and j represents a numerical value 1 or 2 indicating the valency of the anion Z, as obtained by electrochemically and/or chemically doping the above-mentioned polymer having a chemical structure represented by the formula (I).

In accordance with the present invention, there is provided a method for producing the water-soluble conducting polymer mentioned above, which method comprises allowing a sulfonating agent to react on compounds having the formula (IV): 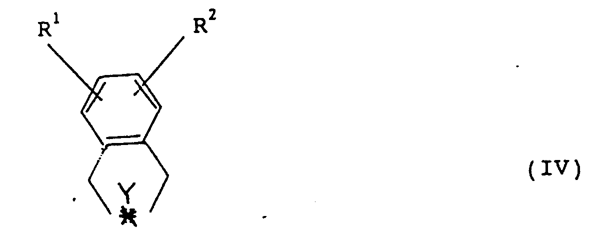 wherein R¹, R², and R³ have the same meanings as defined above with respect to the formula (I) and Y represents S, O, Se, Te, S=O, Se=O, Te=O or NR³ and the general formula (V): 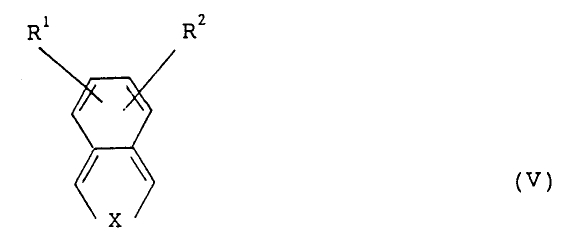 wherein R¹, R², X, and R³ have the same meanings as defined above with respect to the formula (I) or on at least one compound selected from the compounds mentioned above.

### BRIEF DESCRIPTION OF THE DRAWINGS

The present invention will be better understood from the description set forth below with reference to the accompanying drawings, wherein:
Fig. 1 is a UV spectrum of the polymer obtained in Example 1;
Fig. 2 is a gel permeation chromatograph of the polymer obtained in Example 1;
Fig. 3 is an infrared absorption spectrum of the polymer obtained in Example 1;
Fig. 4 shows a cyclic voltammogram performed on the film of the polymer obtained in Example 1; and
Fig. 5 is a UV spectrum of the polymer obtained in Example 2.

### DESCRIPTION OF THE PREFERRED EMBODIMENTS

The substituents R¹ and R² of the polymer having a chemical structure represented by the formula (I) according to the present invention are only required to be those inhibiting neither the reaction of sulfonation nor the polymerization reaction of monomers. For example, they are independently selected from those among H, linear or branched alkyl or alkoxy groups having 1 to 20 carbon atoms, aliphatic or aromatic primary, secondary or tertiary amino groups, trihalomethyl groups such as trichloromethyl, phenyl group, and substituted phenyl groups. Optionally, the above-mentioned alkyl or alkoxy groups may contain a carbonyl, ether, or amide bond in their chains having 1 to 20 carbon atoms.

Specifical examples of R¹ and R² are exemplified as such substituents as hydrogen, alkyl groups and alkoxy groups. More specifical examples of such alkyl groups include methyl, ethyl, propyl, isopropyl, butyl, pentyl, hexyl, octyl, dodecyl, methoxyethyl, ethoxyethyl, acetonyl, phenacryl and the like, and those of such alkoxy groups include methoxy, ethoxy, propoxy, isopropoxy, octyloxy, and dodecyloxy.

Other specifical examples of R¹ and R² include amino groups such as methylamino, ethylamino, diphenylamino, anilino, and the like, trifluoromethyl group, phenyl group, tolyl group, xylyl group, acylamido groups such as acetoamido.

The symbol m which means the ratio of substitution of "sulfo"-containing group at benzene ring of the polymer represents a numerical value in the range between 0.2 and 2, and the range between 0.4 and 1.3 is preferably represented.

The symbol X in the formula (I) represents S, O, Se, Te, or NR³ and thus the chemical structure represented by formula (I) is named isothianaphthenylene, isobenzofurylene, isobenzoselenylene, isobenzotellurylene, or isoindolylene structure. The substituent R³ mentioned above represents a linear or branched alkyl group having 1 to 6 carbon atoms or substituted or unsubstituted aryl group. The alkyl groups in the substituents R³ may optionally contain a carbonyl, ether, or amide bond in its chain having 1 to 6 carbon atoms.

Specifical examples of R³ are exemplified as such substituents as hydrogen, methyl, ethyl, propyl, isopropyl, butyl, hexyl, phenyl, tolyl, methoxyethyl, ethoxyethyl, acetonyl, and acetyl.

The symbol M represents H⁺ an alkali metal ion such as Na⁺, Li⁺ or K⁺, or a cation such as ammonium or an alkyl-substituted or aryl-substituted cation of Vb group element such as N(CH₃)₄⁺ or N(C₆H₅)₄⁺. The conversion to the specific cation is easily effected by means of an ordinary ion-exchange resin.

The molecular weight of the water-soluble conducting polymer of the present invention is in the range between 1,000 and 500,000, preferably between 10,000 and 100,000.

The water-soluble conducting polymer of the present invention is a novel substance. Among those polymers having a chemical structure represented by any of the formula (I), (II), and (III), a polyisothianaphthene derivative (i.e., S for X in the formula (I), (II) or (III) has such a small energy gap as about 1.0 eV as a semiconductor, which is smaller than that of a known water-soluble conductive polymer such as a polythiophene derivative having a sulfoalkyl group as a substituent, and is characterized by exhibiting high conductivity at a low doping level and having high stability in its conductivity. Therefore, the present polymer has sufficiently weak absorbance in the visible ray region, particularly in a doped state, so that it can serve as a transparent conducting material having high stability in its conductivity.

The method for producing a polymer according to the present invention provides a practical and novel bicyclic water-soluble conducting polymer by causing a sulfonating agent to react on a compound represented by the formula (IV) or formula (V). This method using the sulfonating agent provides the novel bicyclic water-soluble conducting polymer from a relevant monomer by simultaneously effecting the polymerization reaction and the sulfonating reaction in one step. Thus, it constitutes itself a novel method of production. Namely, the production method of the present invention is a particularly effective means for producing the bicyclic water-soluble conducting polymer from said monomer compound by said reactions effected in one step. This advantage is well appreciated because such a bicyclic conducting polymer as polyisothianaphthene is infusible and insoluble in organic solvents or in Brönsted acid such as mineral acids and accordingly, the sulfonation does not proceed like polyaniline which is soluble in organic solvents.

The water-soluble conducting polymer having a chemical structure represented by the formula (I) produces an amphoteric water-soluble conducting polymer having a chemical structure represented by the formula (II) and/or (III) by electrochemical or chemical oxidation.

Conversely, the polymer having a chemical structure represented by the formula (II) and/or (III) converts itself into a polymer having a chemical structure represented by the formula (I) by electrochemical or chemical reduction. Thus, the polymer having a chemical structure represented by the formula (I) and the polymer having a chemical structure represented by the formula (II) and/or (III) can be reversibly doped and de-doped by an oxidation/reduction reaction.

The doping mentioned above can be effected by any of the known electrochemical and chemical methods. For example, electrochemical doping method which comprises nipping a water-soluble conducting polymer film between opposed electrodes, placing the nipped film in a solution containing a dopant, and applying a potential to the electrodes may be adopted. For chemical doping, the gaseous phase method which comprises causing a dopant such as iodine in the gaseous phase to react on a water-soluble conducting polymer film may be used (See "Fundamental Principles and Applications of Conducting Polymers - Synthesis, Physical Properties, Evaluation, and Applied Technologies", page 245 - 259, I.P.C.).

The dopants which are effectively usable in the reaction under discussion (represented by the symbol Z in the formula (III)) include halogenide anions of Vb group elements such as PF₆⁻, AsF₆⁻ and SbF₆⁻, halogenide anions of IIIb group elements such as BF₄⁻, halogen anions such as I⁻ (I₃⁻), Br⁻ and Cl⁻, perhalogenate anions such as ClO₄⁻, Lewis acid, protonic acid, electrolytic anions and polyelectrolytic anions, for example. The dopant does not need to be limited to these examples. Optionally, two or more such dopants may be used in combination.

Now, the method to be employed in producing the water-soluble conducting polymer of the present invention will be described below.

The polymer having a chemical structure represented by the formula (I), (II), and/or (III) can be produced by causing a sulfonating agent such as fuming sulfuric acid to react on the compound having the formula (IV) or (V).

Specifically, the reaction of cationic polymerization and the reaction of sulfonation occur in one and the same reaction solution on the compound represented by the formula (IV) or (V) to produce the polymer having a chemical structure represented by the formula (II) or (III). The produced polymer can be easily converted by neutralization into the polymer having a chemical structure represented by the formula (I). The polymer having structure (II) or (III), therefore, may be utilized in its unmodified form. Since the control of the doping level in the compound (II) or (III) is easy to effect, it will be more convenient to produce the polymer having structure (I) by thoroughly effecting the neutralization mentioned above and, whenever necessary, produce the polymer having structure (II) or (III) from the polymer having structure (I) as mentioned above.

Of the compounds represented by the general formula (IV), those compounds having H for both R¹ and R² and S for X can be easily produced by such known methods as disclosed by J. A. Gladysz et al. in "Tetrahedron" 35, 2329 (1979), for example.

Of the compounds having the formula (V), those compounds having H for both R¹ and R² and S for X can be easily produced from the compounds having the formula (IV) by such known methods as disclosed by R. Meyer et al. in "J. Prakt. Chem"., 20, 244 (1963), for example.

The sulfonating agents which are effectively usable herein include, for example, sulfuric acid, fuming sulfuric acid, sulfur trioxide, chlorosulfonic acid, fluorosulfonic acid, and sulfamic acid. Although the amount of the sulfonating agent to be used herein is not specifically limited, because it is variable depending the kind of monomer and the kind of sulfonating agent, the preferable amount is in the range between 1.1 to 20 equivalents to the molar amount of the monomer. Optionally, two or more such sulfonating agents may be used in combination.

The concentration of the monomer usable in the production of the polymer having a chemical structure represented by the formula (I), (II), and/or (III) is generally desired to be in the range between 10⁻⁴ and 10 mol/liter, although it is variable depending upon the kind of monomer and the scale of reaction.

The reaction temperature usable in the production of the polymer having a chemical structure represented by the formula (I), (II), and/or (III) is not particularly limited but fixed, depending on the particular method of reaction to be used. Generally, the reaction temperature is preferably in the range between -80°C and 250°C, more preferably between -30°C and 150°C. The polymerization time is preferably in the range between 0.01 hour and 200 hours, although it is variable depending upon the method of polymerization, the temperature of polymerization or the monomer and cannot be generally defined.

The solvent usable in the polymerization reaction for the production of the polymer having a chemical structure represented by the formula (I), (II), and/or (III) from the compound having the formula (IV) or (V) cannot be generally defined because it is variable, similarly to the polymerization temperature and the polymerization time, depending upon the sulfonating agent and the monomer to be used in the polymerization reaction. The solvent is only required to be capable of dissolving the monomer and the sulfonating agent and to be one inhibiting neither the reaction of sulfonation nor the polymerization reaction. More specifically, the solvents which are effectively usable herein include, for example, water, sulfuric acid, fuming sulfuric acid, formic acid, acetic acid, propionic acid, acetic anhydride, ethers such as tetrahydrofuran, dioxane and diethyl ether, polar solvents such as dimethyl formamide, acetonitrile and benzonitrile, esters such as ethyl acetate and butyl acetate, and non-aromatic chlorine type solvents such as chloroform and methylene chloride. Optionally, these solvents may be used in the form of any mixture thereof.

Further, in order to prevent the formation of sulfone compound as a by-product which is known to be formed during the reaction of sulfonation, any known inhibitory compound may be allowed to be added upon and during the sulfonation and polymerization reactions. Although the inhibitory compound to be used herein and its amount are variable depending upon the sulfonating agent and monomer, specifical examples of such compounds include fatty acid , organic peroxide, fatty acid anhydride, pyridine, acetic acid, ketone, effectively usable in the range between 0.01 and 5 mole %.

The polymer having a chemical structure of the formula (I), (II), or (III) is soluble in water and may include one which is also soluble in organic solvents. In the case of the polymer which is prepared in the form of an aqueous solution, it can be separated and purified by ultrafiltration, dialysis, and/or ion exchange operation. In the case of the polymer which is prepared in the form of precipitate from the solvent used in the reaction, it can be separated and purified by filtration, reprecipitation, and/or solvent fractionation.

The polymer according to the present invention may be a copolymer with another monomer which is capable of imparting to the copolymer a main-chain structure possessing a π-electron conjugate system, or a copolymer which contains, for example, isothianaphthenylene, isobenzofurylene, isobenzoindolylene, isobenzoselenylene, isobenzotellurylene, thienylene, pyrrolylene, furylene, selenylene, tellurylene, iminophenylene, phenylene, vinylene and/or ethynylene structures in the polymer main chain. It should be noted that the copolymers are not limited to these examples. The copolymer can be produced by allowing such a heterocyclic monomer as one which generates the main-chain structure as mentioned above to coexist in the reaction mixture of polymerization reaction described herein.

When such a heterocyclic monomer as one which produces the main-chain structure as mentioned above is copolymerized by the method described above with the compound having the formula (IV) or (V), the product of this copolymerization is a polymer containing one structure having the formula (I), (II), and/or (III) or a polymer containing two or more such structures.

The polymers, including copolymers, having the chemical structure represented by the formula (I), (II), and/or (III) and obtained by the above-mentioned production method generally exhibit high degrees of solubility in water. When the symbol M in the general formula is hydrogen, some of the polymers produced assume the form of gel in a high concentration. The solubility in a solvent and the affinity to the solvent of the polymers may be varied depending upon the symbol M.

From the polymers having the chemical structure represented by the formula (I), (II), or (III) or copolymers thereof, owing to their solubility in water, films, linear shaped articles such as fibers, or bulky shaped articles such as rods, plates, sheets and other solid articles can be easily manufactured by the molding or film making methods which are known in the plastic industry.

The concentration of the solution to be used in said molding or film making methods is preferably in the range between 0.5% and 60% by weight, although it is variable depending upon the condition of molding, the chemical structure of polymer, or the kind of solvent. The molding or film making process is preferably carried out in an atmosphere of inert gas or under vacuum. A film of the polymer can be produced by preparing a solution of the polymer in an appropriate solvent and casting the polymer solution on a proper medium such as, for example, a glass plate or sodium bromide disc. Fibers or a bulky shaped article of the polymer is produced by directly shaping the polymer solution in a desired shape. The polymer, when necessary, may be stretched to a desired shape.

Furthermore, according to the present invention, the water-soluble conducting polymer can be processed to similar articles as above which comprise of such water-soluble conducting polymer and another polymer such as polyvinylalcohol in an optional ratio, for example, by dissolving or mixing the former and the latter in an appropriate solvent and processing the polymers contained in the resulting solution (or the mixture) into a desired shaped article by a similar method as above. In such a case, the amount of said another polymer may preferably be used in the range between 10 and 500 % by weight of the water-soluble conducting polymer. The solvent used herein is preferably water, but is not limited to water and may be selected from any other solvents or may be a mixed solvent, provided that the polymer has sufficient solubility in such a selected solvent for processing a shaped article.

The shaped articles manufactured by the above-mentioned processes have quite stable conductivity during the long period of time.

The present invention is based on the principle that the novel water-soluble conducting polymer having a chemical structure represented by the formula (I) can be obtained by causing a sulfonating agent to react on the bicyclic heterocyclic monomer compound having the formula (IV) or (V). The polymer is obtained, for the first time, solely by the particular reaction in which the reaction of sulfonation and the polymerization reaction are simultaneously effected by directly reacting the sulfonating agent on the monomer compound.

The polymer having the chemical structure represented by the formula (I) converts itself into the novel and water-soluble conducting polymer having the chemical structure represented by the formula (II) or (III) by doping, thereby the conductivity of the polymer is remarkably increased. This novel polymer can be reverted to the original polymer having the chemical structure represented by the formula (I) by either remarkably increasing electroconductivity or de-doping.

### EXAMPLES

The present invention will now be further illustrated by the following Examples.

### Example 1

Method for production of the polymer having a chemical structure represented by the formula (I), having H for both R¹ and R², S for X, and Na⁺ for M.

To 2.0g of fuming sulfuric acid (20% SO₃) kept at 10°C, 550 mg (4.0 mmol) of 1,3-dihydroisothianaphthene, a known compound, was slowly added as stirred. When the resultant mixture was allowed to cool to a room temperature and was continued to stir for one hour, the reaction solution became a reddish purple color. This reaction solution, when heated to 70°C, was changed to a dark blue color. After 30 minutes, it was turned into a solid substance. The resultant reaction mixture was placed in 100 ml of 0.1N NaOH/methanol to be neutralized and precipitated therein. The precipitate was separated with a centrifugal separator. The solid reaction product was dissolved in 100 ml of water and the resultant aqueous solution was treated with a dialysis membrane to remove sodium sulfate as foreign matter. The dialyzed solution was allowed to evaporate under a reduced pressure to remove the solvent therefrom and then dried under vacuum, to obtain 430 mg of a black Na form polymer (yield 45%).

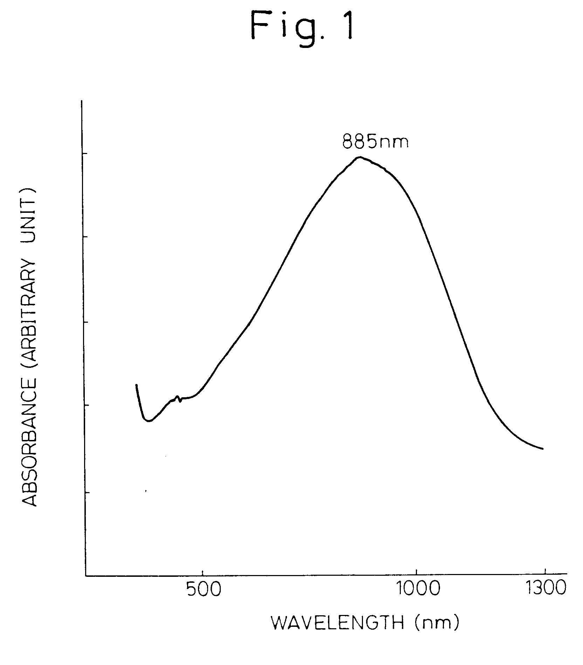

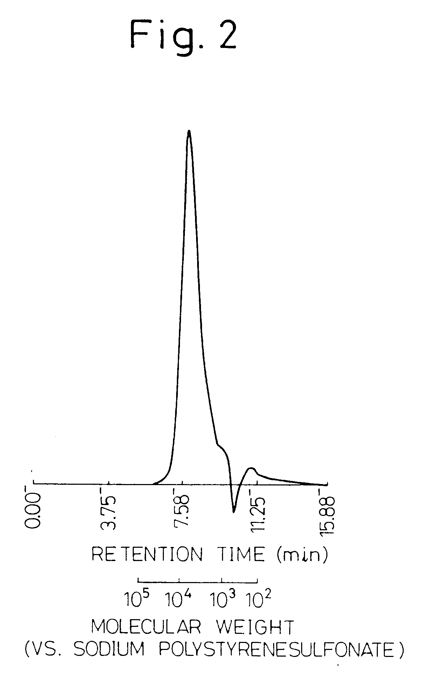

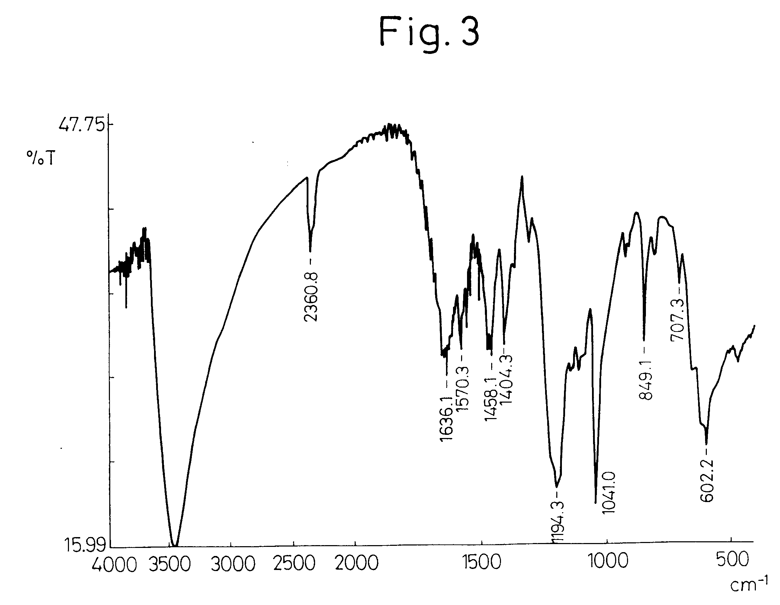

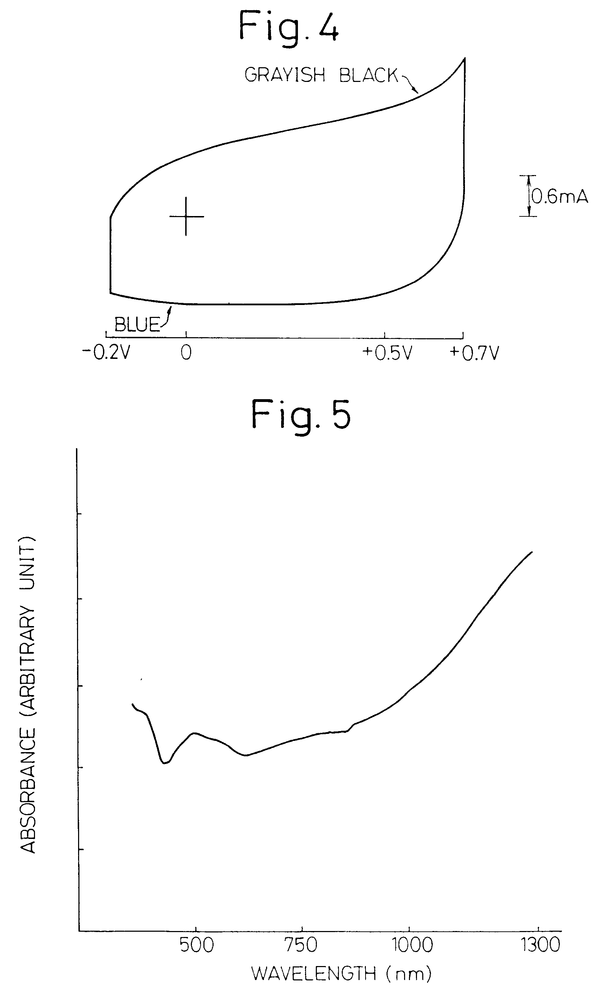

The polymer thus produced yielded a UV spectrum illustrated in Fig. 1. The molecular weight distribution of the polymer measured by GPC is illustrated in Fig. 2. The IR spectrum of the polymer is illustrated in Fig. 3. Fig. 4 shows the cyclic voltammogram performed on a polymer film (polymer film/ITO glass operating electrode, platinum counter electrode, silver/silver ion reference electrode in acetonitrile, borofluoric acid-acetonitrile electrolyte, scanning speed 50 mV/sec.). The graph indicates that the polymer, in a cycle between -0.2V and +0.7V under fixed conditions, can be electrochemically doped and de-doped.

| Elementary analyses (%) for C₈H₃S₂O₃Na | | | | |
|---|---|---|---|---|
| Calculated: | C; 41.02%, | H; 1.29%, | S; 27.38%, | Na; 9.82% |
| Found: | C; 40.57%, | H; 1.51%, | S; 27.55%, | Na; 9.38% |

### Example 2

Method for production of the polymer having a chemical structure represented by the formula (I) having H for both R¹ and R², S for X, and H⁺ for M.

An aqueous solution was prepared by dissolving 380 mg of a reaction mixture obtained in the same manner as in Example 1 in about 1,000 ml of water and adjusting a pH of the solution to 1.9 with hydrochloric acid. The aqueous solution was purified and concentrated by ultrafiltration. The concentrate was allowed to evaporate under a reduced pressure to remove water and dried under vacuum, to obtain 320 mg of a black polymer.

The UV spectrum of the polymer produced above is illustrated in Fig. 5. When the polymer was then adjusted to a pH value of about 8 by addition of aqueous NaOH, the UV spectrum of the polymer in the solution was changed to that which is illustrated in Fig. 1.

### Example 3

Method of production of the polymer having a chemical structure represented by the formula (I) having H for both R¹ and R², S for X, and H⁺ for M.

An aqueous solution of acid form polymer was obtained by dissolving 200 mg of a polymer prepared in the same manner as in Example 1 in 50 ml of water and subjecting the resultant solution to an ion-exchange treatment using an H form cation-exchange resin (Amberlite IR-120B). When this aqueous solution was allowed to evaporate under a reduced pressure to remove water and dried under vacuum, 180mg of a black polymer was obtained. The spectrum of the produced polymer was similar to that shown in Fig. 5.

### Example 4

Method for production of the polymer having a chemical structure represented by the formula (I) having H for both R¹ and R², S for X, and H⁺ for M.

In 4.0 ml of sulfuric acid containing 2.0 ml of fuming sulfuric acid (20% SO₃), 500 mg of 1,3-dihydroisothianaphthene was slowly added as stirred at a room temperature and then continuously stirred overnight. The resultant reaction solution exhibited a red color. When it was then heated to 90°C, it changed a dark blue color at once. After three hours, it was turned into a dark blue homogeneous solution.

Further, the reaction mixture was heated and stirred at the same temperature for two hours and then poured into 1,000 ml of water. The resultant aqueous solution was adjusted to pH 1.9, purified with an ultrafilter membrane and concentrated to 100 ml. The concentrate was allowed to evaporate under a reduced pressure to remove water and dried under vacuum, to obtain 390 mg of a black polymer.

The UV spectrum and the IR spectrum of the polymer produced above were similar to those obtained in Example 2.

| Elementary analysis (%) for C₈H₄O_{1.65}S_{1.55} | | | |
|---|---|---|---|
| Calculated: | C; 54.54%, | H; 2.27%, | S; 28.18% |
| Found: | C; 55.33%, | H; 2.98%, | S; 27.45% |

### Example 5

Method for production of the polymer having a chemical structure represented by the formula (I) having H for both R¹ and R², S for X, and Na⁺ for M.

To 2.0g of fuming sulfuric acid (20% SO₃) kept at 10°C, 500 mg (4.0 mmol) of 1,3-dihydroisothianaphthene-2-sulfoxide, a known compound, was slowly added as stirred. The resultant mixture was allowed to cool to room temperature and stirred continuously for one hour. The reaction solution exhibited a reddish purple color. When the reaction solution was then heated to 80°C, it changed to a dark blue color. After 30 minutes, it was turned into a solid substance. The resultant reaction mixture was placed in 100 ml of 0.1N NaOH/methanol. The precipitate was centrifugally separated. The solid centrifugate was dissolved in 100 ml of water, dialyzed to expel excess sodium sulfate, then the dialyzed solution was allowed to evaporate under a reduced pressure to remove the solvent, and dried under a vacuum to obtain 430 mg of a black polymer.

The UV spectrum and the IR spectrum of the produced polymer were similar to those obtained in Example 1.

| Elemental analyses (%) for C₈H_{2.88}0_{3.36}S_{1.12}Na_{1.12} | | | | |
|---|---|---|---|---|
| Calculated: | C; 44.81%, | H; 1.34%, | S; 16.73%, | Na; 12.02% |
| Found: | C; 44.21%, | H; 1.13%, | S; 16.53%, | Na; 12.84% |

### Example 6

Method for production of the polymer having a chemical structure represented by the formula (I) having H for both R¹ and R², S for X, and Na⁺ for M.

To 8 ml of sulfuric acid containing 2.0g of fuming sulfuric acid (20% SO₃) kept at 0°C in an atmosphere of nitrogen, 400 mg of isothianaphthene, a known compound, was slowly added as stirred. When the resultant mixture was stirred continuously for eight hours, the resultant reaction solution exhibited a red color. When the reaction solution was then allowed to cool to room temperature and subsequently heated to 90°C, it exhibited a dark blue color. After five hours, it turned into a homogeneous black solution.

The reaction mixture was poured into 100 ml of 0.lN NaOH/methanol. The precipitate was centrifugally separated. The solid centrifugate was dissolved in 100 ml of water, dialyzed to remove excess sodium sulfate, then the dialyzed solution was allowed to evaporate under a reduced pressure to remove water, and dried under vacuum to obtain 220 mg of a black polymer.

The UV spectrum and the IR spectrum of the produced polymer were similar to those obtained in Example 1.

### Example 7

Conversion of the polymer having a chemical structure represented by the formula (I) to the polymer having a chemical structure represented by the formula (II) and/or formula (III).

A polymer film was manufactured by dissolving 50 mg of a polymer prepared in the same manner as in Example 1 in 2 ml of water and casting the resultant aqueous solution on an ITO glass plate by spin-casting method. An electrochemical cell was constructed by using the film-coated ITO glass plate as a working electrode, a platinum wire as a counter electrode, and a silver/silver ion electrode as a reference electrode. When a potential of 0.5V was applied electrochemically to the cell at a room temperature in a 0.5 mol/liter HBF₄/acetonitrile solution (having a water content of 6%), the film which was in a blue color turned to a grayish black color.

### Example 8

Conversion of the polymer having a chemical structure represented by the formula (I) to the polymer having a chemical structure represented by the formula (II) and/or formula (III).

A polymer film was manufactured by dissolving 50 mg of a polymer prepared in the same manner as in Example 3 in 2 ml of water and casting the resultant aqueous solution on a platinum foil by spin-casting method. An electrochemical cell was constructed by using the film-coated platinum foil as a working electrode, a platinum wire as a counter electrode, and a silver/silver ion electrode as a reference electrode. Then this cell was electrically scanned at a room temperature in a 0.1 mol/liter tetrabutylammonium perchlorate/acetonitrile solution, to confirm the occurrence of the same H⁺-popping as described in "J. Am. Chem. Soc.", 110, 2983 (1988). The detection of the release of H⁺ indicates that the film possessed a self-doping function. Thus, the production of the polymer having the chemical structure represented by the formula (II) was accomplished.

### Example 9

Conversion of the polymer having a chemical structure represented by the formula (I) to the polymer having a chemical structure represented by the formula (III).

A polymer film was manufactured by dissolving 100 mg of a polymer prepared in the same manner as in Example 1 in 2 ml of water and casting the resultant aqueous solution on a glass plate by spin-casting method. When iodine was allowed to affect this film in a gaseous phase, the color of the film changed from blue to light blackish gray. The electroconductivity (determined by four-probe method) at a room temperature rose from σ = 5 × 10⁻⁵ S/cm to σ = 8 × 10⁻¹ S/cm. Thereafter, the film was separated from the glass plate and subjected to elementary analysis.

| Elementry analyses (%) for C₈H₃S₂O₃NaI_{0.3} | | | | | |
|---|---|---|---|---|---|
| Calculated: | C; 35.25%, | H; 1.10%, | S; 23.49%, | Na; 8.42%, | I; 13.95% |
| Found: | C; 35.47%, | H; 1.34%, | S; 23.55%, | Na; 7.98%, | I; 13.74% |

### Example 10

Method for production of the polymer having a chemical structure represented by the formula (I) having H for both R¹ and R², NR³ for X, CH₃ for R³, and Na⁺ for M.

To 4.0 ml of sulfuric acid containing 2.0 ml of fuming sulfuric acid (20% SO₃), 500 mg of N-methylisoindoline produced by the known method reported as in "Adv. Heterocycl. Chem.", 10, 113 (1969) was placed slowly added as stirred at a room temperature, and stirred continuously for five hours at a room temperature. When the resultant reaction mixture was then heated to 90°C for three hours, the reaction solution exhibited a black color.

The reaction mixture was poured into 100 ml of methanol. The precipitate consequently formed was centrifugally separated. The solid centrifugate was dissolved in 100 ml of 0.5N aqueous sodium hydroxide solution, dialyzed to remove excess sodium sulfate and sodium hydroxide, then the dialyzed solution was allowed to evaporate under a reduced pressure to remove the solvent, and dried under vacuum, to obtain 380 mg of a black polymer.
- IR:: (KBr disk, cm⁻¹); 1803w, 1412w, 1314m, 1225w, 1194s, l042s, 750s

### Example 11

Method for production of the polymer having a chemical structure represented by the formula (I) having H for R¹, O(CH₂)₉CH₃ for R², S for X, and Na⁺ for M.

To 8.0 ml of sulfuric acid containing 2.0 ml of fuming sulfuric acid (20% SO₃) kept at 0°C, 500 mg of 5-decyloxy-1,3-dihydroisothianaphthene produced by a known method as reported in Japanese Unexamined Patent Application (Kokai No. 2-242816) was slowly added as stirred and then continuously stirred for one hour. When the resultant mixture was then heated to 90°C for 30 minutes, the reaction solution turned black.

The resultant reaction mixture was poured into 100 ml of 0.5N aqueous NaOH/methanol solution and the precipitate was separated centrifugally. The solid centrifugate consequently obtained was dissolved in 100 ml of water, dialyzed to remove excess sodium sulfate, then the dialyzed solution was allowed to evaporate under a reduced pressure to remove the solvent, and dried under vacuum to obtain 150 mg of a black polymer. The UV spectrum of the produced polymer was similar to that obtained in Example 1.

### Example 12

On the surface of a glass plate as a support, 10% by weight of an aqueous solution of a water-soluble conducting polymer prepared in the same manner as in Example 2 was applied and left drying thereon spontaneously. The applied layer of the polymer was dried under vacuum and separated from the glass plate, to obtain a free-standing film of about 20 µm in thickness. The electroconductivity of this film (determined with a four-terminal testing system) at a room temperature was σ = 1.4 S/cm. The conductivity of the film remained stable when it was kept in air for two months.

### Example 13

On the surface of a glass plate as a support, an aqueous solution of 1% by weight of a water-soluble conducting polymer produced in the same manner as in Example 2 was applied by the use of a spin coater at a room temperature and a revolution number of 1,000 rpm to form a thin film of about 0.05 µm in thickness (determined by the needle touch method called Dektak). This thin film exhibited good adhesiveness to the glass plate support and showed surface resistance of about 7.8 × 10⁵ Ω/□. The transmittance of the film at 500 nm in a visible ray region was 96%. Thus, the polymer yielded an conducting film of extremely high transparency.

Thin films were prepared in the same manner as above except for the revolution number of a spin coater and the properties of the films obtained are shown in Table 1.

**Table 1**

| Revolution Numbers (rpm) | Film Thickness (µm) | Surface Resistance (Ω/□) | Transmittance (%, at 500 nm) |
|---|---|---|---|
| 200 | 0.25 | 1.5 × 10⁵ | 83 |
| 500 | 0.10 | 3.8 × 10⁵ | 93 |
| 1000 | 0.05 | 7.8 × 10⁵ | 96 |

### Example 14

On the surface of a glass plate as a support, an aqueous solution containing 1% by weight of a water-soluble conducting polymer produced in the same manner as in Example 2 and 1% by weight of polyvinylalcohol (degree of polymerization of 500) was applied by the use of a spin coater at a room temperature at a revolution number of 1,000 rpm to form a thin film of about 1 µm in thickness, determined in the same manner as in Example 13. This thin film exhibited good adhesiveness to the glass plate support and showed surface resistance of about 1 × 10⁷ Ω/□. The transmittance of the film at 500 nm in a visible ray region was 97%.

### Example 15

The water-soluble conducting polymer produced in the same manner as in Example 2 was not only soluble in water but also in dimethylformamide (DMF), dimethylsulfoxide (DMSO), N-methylpyrrolidone (NMP) and methanol respectively.

### Example 16

An aqueous solution containing 5% by weight of a water-soluble conducting polymer produced in the same manner as in Example 10 and 20% by weight of polyvinylalcohol (degree of polymerization of 2000) was placed in a Petri dish of a diameter of about 5 cm) and was allowed to evaporate to remove water and then dried under vacuum. A shaped plate (disc) of about 1 mm in thickness as formed in the dish was separated from the bottom of the dish. This shaped article showed surface resistance of about 8 × 10⁸ Ω/□.

### Example 17

An aqueous solution containing 10% by weight of a water-soluble conducting polymer produced in the same manner as in Example 1 and 12% by weight of polyvinylalcohol (degree of polymerization of 2000) was placed in a syringe having a muzzle diameter of about 1 mm, and the solution was slowly extruded into ethanol and kept for a day. A fibrous shaped article formed was then removed from the solvent, and dried to obtain blackish blue fiber. The fiber had electroconductivity of σ = 2 × 10⁻⁶ S/cm, measured by four-probe method, at a room temperature. When iodine was allowed to affect this fiber in a gaseous phase in the same manner as in Example 9, the electroconductivity at a room temperature rose to σ = 5 × 10⁻² S/cm.

This fiber was drawn at a draw ratio of 1.5 at a room temperature, and the electroconductivity of the resultant fiber rose to 0.3 S/cm.

### Example 18

On the surface of a glass plate as a support, an aqueous solution of a water-soluble conducting polymer produced in the same manner as in Example 2 and polyvinylalcohol (degree of polymerization of 500) as composed at various ratio was applied by the use of a spin coater at a room temperature and a revolution number of 1,000 rpm. The surface resistance of the thin films obtained is shown in Table 2.

**Table 2**

| Water-soluble Conducting Polymer | Polyvinylalcohol | Surface resistance |
|---|---|---|
| 1 wt% | 1 wt% | 1 × 10⁷ Ω/□ |
| 1 wt% | 5 wt% | 3 × 10⁷ Ω/□ |
| 1 wt% | 10 wt% | 3 × 10⁸ Ω/□ |

The conducting polymer of the present invention is water-soluble and is a polymer exhibiting high workability and possessing high electroconductivity. Thus, it is useful as electrodes, electronic display elements, nonlinear optical elements, optical conversion elements, antistatic materials, various conducting materials, and optical materials which are required to allow precision fabrication.

## Claims

1. A water-soluble conducting polymer having a chemical structure represented by the formula (I): 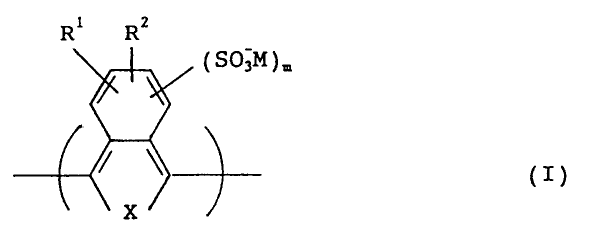 wherein R¹ and R² independently represent H, a linear or branched alkyl or alkoxy group having 1 to 20 carbon atoms, a primary, secondary or tertiary amino group, a trihalomethyl group, a phenyl group or a substituted phenyl group, X represents S, O, Se, Te or NR³, R³ represents H, a linear or branched alkyl group having 1 to 6 carbon atoms or a substituted or unsubstituted aryl group, and wherein the chain in the alkyl group of R¹, R² or R³ or in the alkoxy group of R¹ or R² optionally contains a carbonyl, ether or amide bond, M represents H⁺, an alkali metal ion selected from the group of Na⁺, Li⁺ or K⁺ or a quaternary ammoniumcation, an m represents a numerical value in the range between 0.2 to 2.

2. A method for producing a polymer according to claim 1 having a chemical structure represented by the formula (I), which method comprises allowing a sulfonating agent to react on a compound having the formula (IV): 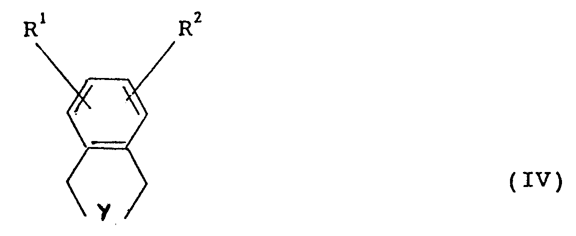 wherein R¹ and R² independently represent H, a linear or branched alkyl or alkoxy group having 1 to 20 carbon atoms, a primary, secondary or tertiary amino group, a trihalomethyl group, a phenyl group or a substituted phenyl group, Y represents S, O, Se, Te, S=O, Se=O, Te=O or NR³, R³ represents H, a linear or branched alkyl group having 1 to 6 carbon atoms or a substituted or unsubstituted aryl group, and wherein the chain in the alkyl group of R¹, R² or R³ or in the alkoxy group of R¹ or R² optionally contains a carbonyl, ether or amide bond.

3. A method for producing a polymer according to claim 1 having a chemical structure represented by the formula (I), which method comprises allowing a sulfonating agent to react on a compound having the formula (V): 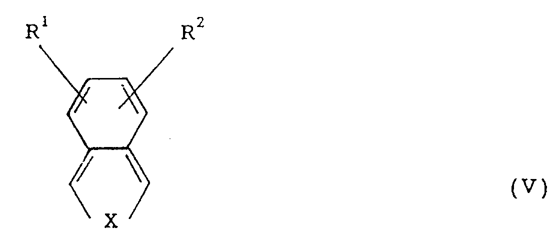 wherein R¹ and R² independently represent H, a linear or branched alkyl or alkoxy group having 1 to 20 carbon atoms, a primary, secondary or tertiary amino group, a trihalomethyl group, a phenyl group or a substituted phenyl group, X represents S, O, Se, Te or NR³, and R³ represents H, a linear or branched alkyl group having 1 to 6 carbon atoms or a substituted or unsubstituted aryl group, and wherein the chain in the alkyl group of R¹, R² or R³ or in the alkoxy group of R¹ or R² optionally contains a carbonyl, ether or amide bond.

4. A shaped article comprising a water-soluble conducting polymer according to claim 1.

5. A water-soluble conducting polymer having a chemical structure represented by the formula (II): 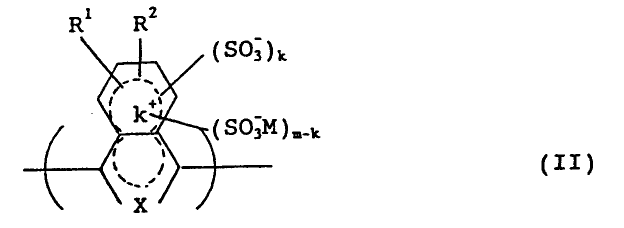 wherein R¹ and R² independently represent H, a linear or branched alkyl or alkoxy group having 1 to 20 carbon atoms, a primary, secondary or tertiary amino group, a trihalomethyl group, a phenyl group or a substituted phenyl group, X represents S, O, Se, Te or NR³, R³ represents H, a linear or branched alkyl group having 1 to 6 carbon atoms or a substituted or unsubstituted aryl group, and wherein the chain in the alkyl group of R¹, R² or R³ or in the alkoxy group of R¹ or R² optionally contains a carbonyl, ether or amide bond, M represents H⁺, an alkali metal ion selected from the group of Na⁺, Li⁺, or K⁺ or a quaternary ammoniumcation, m represents a numerical value in the range between 0.2 to 2, and k represents a numerical value smaller than m.

6. A method for producing a polymer according to claim 5, which method comprises allowing a sulfonating agent to react on a compound having the formula (IV): 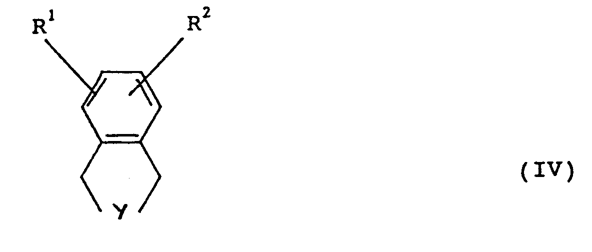 wherein R¹ and R² independently represent H, a linear or branched alkyl or alkoxy group having 1 to 20 carbon atoms, a primary, secondary or tertiary amino group, a trihalomethyl group, a phenyl group or a substituted phenyl group, Y represents S, O, Se, Te, S=O, Se=O, Te=O or NR³, R³ represents H, a linear or branched alkyl group having 1 to 6 carbon atoms or a substituted or unsubstituted aryl group, and wherein the chain in the alkyl group of R¹, R² or R³ or in the alkoxy group of R¹ or R² optionally contains a carbonyl, ether or amide bond, and oxidizing the resulting polymer.

7. A method for producing a polymer according to claim 5, which method comprises allowing a sulfonating agent to react on a compound having the formula (V): 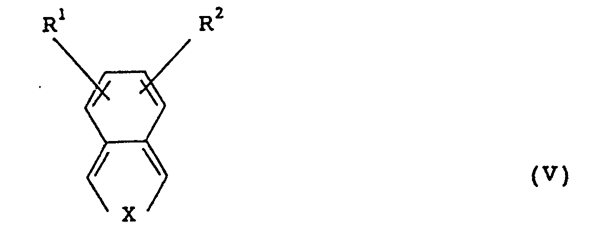 wherein R¹ and R² independently represent H, a linear or branched alkyl or alkoxy group having 1 to 20 carbon atoms, a primary, secondary or tertiary amino group, a trihalomethyl group, a phenyl group or a substituted phenyl group, X represents S, O, Se, Te or NR³, and R³ represents H, a linear or branched alkyl group having 1 to 6 carbon atoms or a substituted or unsubstituted aryl group, and wherein the chain in the alkyl group of R¹, R² or R³ or in the alkoxy group of R¹ or R² optionally contains a carbonyl, ether or amide bond.

8. A shaped article comprising a water-soluble conducting polymer according to claim 5.

9. A water-soluble conducting polymer having a chemical structure represented by the formula (III): 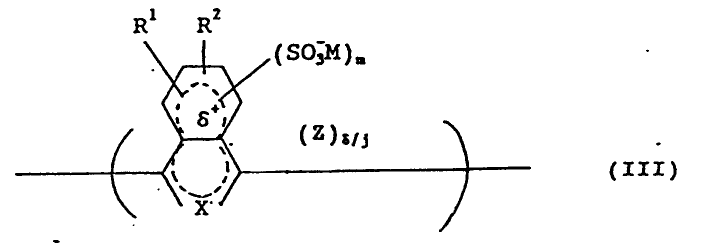 wherein R¹ and R² independently represent H, a linear or branched alkyl or alkoxy group having 1 to 20 carbon atoms, a primary, secondary or tertiary amino group, a trihalomethyl group, a phenyl group or a substituted phenyl group, X represents S, O, Se, Te or NR³, R³ represents H, a linear or branched C₁ to C₆ alkyl group having 1 to 6 carbon atoms or a substituted or unsubstituted aryl group, and wherein the chain in the alkyl group of R¹, R² or R³ or in the alkoxy group of R¹ or R² optionally contains a carbonyl, ether or amide bond, M represents H⁺, an alkali metal ion selected from the group of Na⁺, Li⁺ or K⁺ or a quaternary ammoniumcation, δ represents 0.7 or less, Z represents an anion, m represents a numerical value in the range between 0.2 to 2, and j represents a valency of the anion z of 1 or 2.

10. A method for producing a polymer according to claim 9, which method comprises allowing a sulfonating agent to react on a compound having the formula (IV): 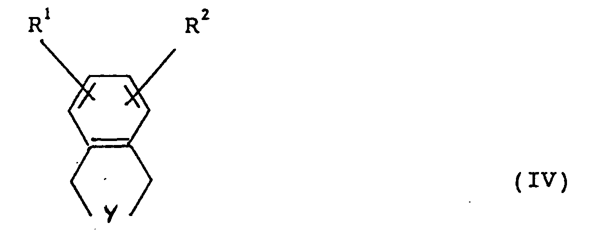 wherein R¹ and R² independently represent H, a linear or branched alkyl or alkoxy group having 1 to 20 carbon atoms, a primary, secondary or tertiary amino group, a trihalomethyl group, a phenyl group or a substituted phenyl group, Y represents S, O, Se, Te, S=O, Se=O, Te=O or NR³, R³ represents H, a linear or branched alkyl group having 1 to 6 carbon atoms or a substituted or unsubstituted aryl group, and wherein the chain in the alkyl group of R¹, R² or R³ or in the alkoxy group of R¹ or R² optionally contains a carbonyl, ether or amide bond, and oxidizing the resulting polymer.

11. A method for producing a polymer according to claim 9, which method comprises allowing a sulfonating agent to react on a compound having the formula (V): 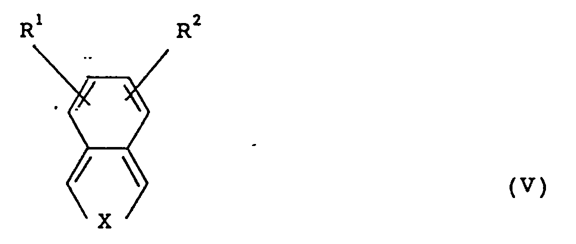 wherein R¹ and R² independently represent H, a linear or branched alkyl or alkoxy group having 1 to 20 carbon atoms, a primary, secondary or tertiary amino group, a trihalomethyl group, a phenyl group or a substituted phenyl group, X represents S, O, Se, Te or NR³, and R³ represents H, a linear or branched alkyl group having 1 to 6 carbon atoms or a substituted or unsubstituted aryl group, and wherein the chain in the alkyl group of R¹, R² or R³ or in the alkoxy group of R¹ or R² optionally contains a carbonyl, ether or amide bond.

12. A shaped article comprising a water-soluble conducting polymer according to claim 9.

## Patentansprüche

1. Wasserlösliches leitfähiges Polymer mit einer chemischen Struktur, die durch die Formel (I) dargestellt wird: 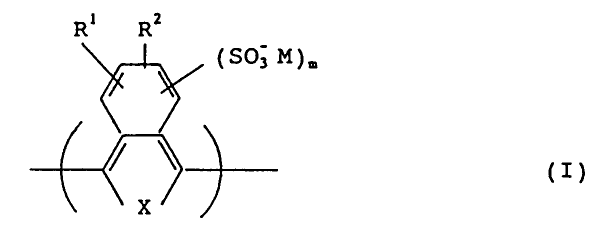 worin R¹ und R² unabhängig die Bedeutung H, lineare oder verzweigte Alkyl- oder Alkoxygruppe mit 1 bis 20 Kohlenstoffatomen, primäre, sekundäre oder tertiäre Aminogruppe, Trihalogenmethylgruppe, Phenylgruppe oder substituierte Phenylgruppe haben, X die Bedeutung S, O, Se, Te oder NR³ hat, R³ die Bedeutung H, lineare oder verzweigte Alkylgruppe mit 1 bis 6 Kohlenstoffatomen oder substituierte oder unsubstituierte Arylgruppe hat, wobei die Kette in der Alkylgruppe von R¹, R² oder R³ oder in der Alkoxygruppe von R¹ oder R² ggf. eine Carbonyl-, Ether- oder Amidbindung enthalt, M die Bedeutung H⁺, Alkalimetallion, das aus der Gruppe ausgewählt ist, die aus Na⁺, Li⁺ oder K⁺ besteht, oder quaternäres Ammoniumkation hat, und m einen numerischen Wert im Bereich von 0,2 bis 2 darstellt.

2. Verfahren zur Herstellung eines Polymer nach Anspruch 1 mit einer chemischen Struktur, die durch die Formel (I) dargestellt wird, wobei das Verfahren die Umsetzung eines Sulfonierungsmittels mit einer Verbindung der Formel (IV) umfaßt: 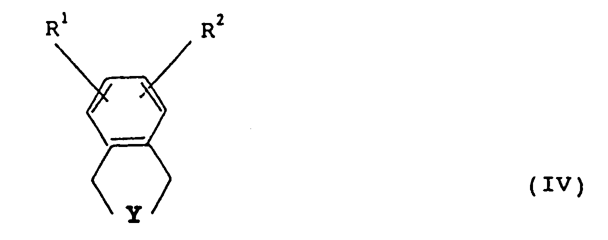 worin R¹ und R² unabhängig die Bedeutung H, lineare oder verzweigte Alkyl- oder Alkoxygruppe mit 1 bis 20 Kohlenstoffatomen, primäre, sekundäre oder tertiäre Aminogruppe, Trihalogenmethylgruppe, Phenylgruppe oder substituierte Phenylgruppe haben, Y die Bedeutung S, O, Se, Te, S=O, Se=O, Te=O oder NR³ hat und R³ die Bedeutung H, lineare oder Verzweigte Alkylgruppe mit 1 bis 6 Kohlenstoffatomen oder substituierte oder unsubstituierte Arylgruppe hat, wobei die Kette in der Alkylgruppe von R¹, R² oder R³ oder in der Alkoxygruppe von R¹ oder R² ggf. eine Carbonyl-, Ether- oder Amidbindung enthält.

3. Verfahren zur Herstellung eines Polymers nach Anspruch 1 mit einer chemischen Struktur, die durch die Formel (I) dargestellt wird, wobei das Verfahren die Umsetzung eines Sulfonierungsmittels mit einer Verbindung der Formel (V) umfaßt: 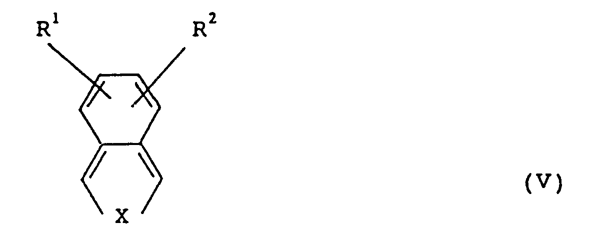 worin R¹ und R² unabhängig die Bedeutung H, lineare oder verzweigte Alkyl- oder Alkoxygruppe mit 1 bis 20 Kohlenstoffatomen, primäre, sekundäre oder tertiäre Aminogruppe, Trihalogenmethylgruppe, Phenylgruppe oder substituierte Phenylgruppe haben, X die Bedeutung S, O, Se, Te oder NR³ hat und R³ die Bedeutung H, lineare oder verzweigte Alkylgruppe mit 1 bis 6 Kohlenstoffatomen oder substituierte oder unsubstituierte Arylgruppe hat, wobei die Kette in der Alkylgruppe von R¹, R² oder R³ oder in der Alkoxygruppe von R¹ oder R² ggf. eine Carbonyl-, Ether- oder Amidbindung enthält.

4. Geformter Artikel, der ein wasserlösliches leitfähiges Polymer nach Anspruch 1 umfaßt.

5. Wasserlösliches leitfähiges Polymer mit einer chemischen Struktur, die durch die Formel (II) dargestellt wird: 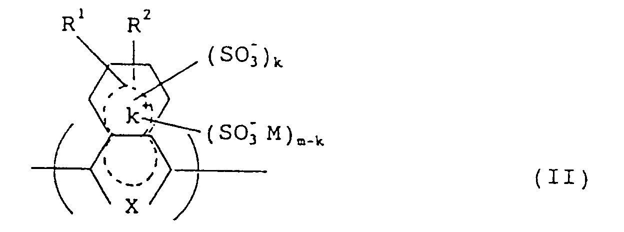 worin R¹ und R² unabhängig die Bedeutung H, lineare oder verzweigte Alkyl- oder Alkoxygruppe mit 1 bis 20 Kohlenstoffatomen, primäre, sekundäre oder tertiäre Aminogruppe, Trihalogenmethylgruppe, Phenylgruppe oder substituierte Phenylgruppe haben, X die Bedeutung S, O, Se, Te oder NR³ hat, R³ die Bedeutung H, lineare oder verzweigte Alkylgruppe mit 1 bis 6 Kohlenstoffatomen oder substituierte oder unsubstituierte Arylgruppe hat, wobei die Kette in der Alkylgruppe von R¹, R² oder R³ oder in der Alkoxygruppe von R¹ oder R² ggf. eine Carbonyl-, Ether- oder Amidbindung enthält, M die Bedeutung H⁺, Alkalimetallion, das aus der Gruppe ausgewählt ist, die aus Na⁺, Li⁺ oder K⁺ besteht, oder quaternäres Ammoniumkation hat, m einen numerischen Wert im Bereich von 0,2 bis 2 darstellt und k einen numerischen Wert kleiner als m darstellt.

6. Verfahren zur Herstellung eines Polymers nach Anspruch 5, wobei das Verfahren die Umsetzung eines Sulfonierungsmittels mit einer Verbindung der Formel (IV): 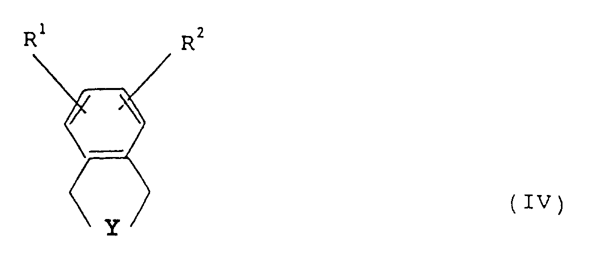 worin R¹ und R² unabhängig die Bedeutung H, lineare oder verzweigte Alkyl- oder Alkoxygruppe mit 1 bis 20 Kohlenstoffatomen, primäre, sekundäre oder tertiäre Aminogruppe, Trihalogenmethylgruppe, Phenylgruppe oder substituierte Phenylgruppe haben, Y die Bedeutung S, O, Se, Te, S=O, Se=O, Te=O oder NR³ hat und R³ die Bedeutung H, lineare oder verzweigte Alkylgruppe mit 1 bis 6 Kohlenstoffatomen oder substituierte oder unsubstituierte Arylgruppe hat, wobei die Kette in der Alkylgruppe von R¹, R² oder R³ oder in der Alkoxygruppe von R¹ oder R² ggf. eine Carbonyl-, Ether- oder Amidbindung enthält; und die Oxidation des resultierenden Polymers umfaßt.

7. Verfahren zur Herstellung eines Polymers nach Anspruch 5, wobei das Verfahren die Umsetzung eines Sulfonierungsmittels mit einer Verbindung der Formel (V) umfaßt: 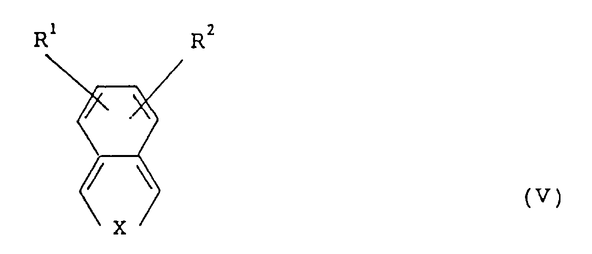 worin R¹ und R² unabhängig die Bedeutung H, lineare oder verzweigte Alkyl- oder Alkoxygruppe mit 1 bis 20 Kohlenstoffatomen, primäre, sekundäre oder tertiäre Aminogruppe, Trihalogenmethylgruppe, Phenylgruppe oder substituierte Phenylgruppe haben, X die Bedeutung S, O, Se, Te oder NR³ hat und R³ die Bedeutung H, lineare oder verzweigte Alkylgruppe mit 1 bis 6 Kohlenstoffatomen oder substituierte oder unsubstituierte Arylgruppe hat, wobei die Kette in der Alkylgruppe von R¹, R² oder R³ oder in der Alkoxygruppe von R¹ oder R² ggf. eine Carbonyl-, Ether- oder Amidbindung enthält.

8. Geformter Artikel, der ein wasserlösliches leitfähiges Polymer nach Anspruch 5 umfaßt.

9. Wasserlösliches, leitfähiges Polymer mit einer chemischen Struktur, die durch die Formel (III) dargestellt wird: 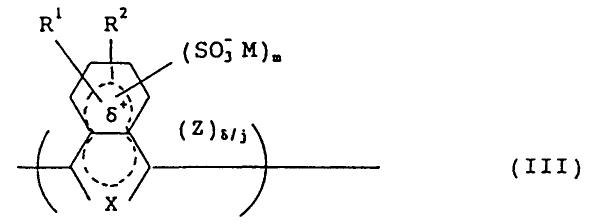 worin R¹ und R² unabhängig die Bedeutung H, lineare oder verzweigte Alkyl- oder Alkoxygruppe mit 1 bis 20 Kohlenstoffatomen, primäre, sekundäre oder tertiäre Aminogruppe, Trihalogenmethylgruppe, Phenylgruppe oder substituierte Phenylgruppe haben, X die Bedeutung S, O, Se, Te oder NR³ hat, R³ die Bedeutung H, lineare oder verzweigte C₁- bis C₆-Alkylgruppe mit 1 bis 6 Kohlenstoffatomen oder substituierte oder unsubstituierte Arylgruppe hat, wobei die Kette in der Alkylgruppe von R¹, R² oder R³ oder in der Alkoxygruppe von R¹ oder R² ggf. eine Carbonyl-, Ether- oder Amidbindung enthält, M die Bedeutung H⁺, Alkalimetallion, das aus der Gruppe ausgewählt ist, die aus Na⁺, Li⁺ oder K⁺ besteht, oder quaternäres Ammoniumkation hat, δ die Bedeutung 0,7 oder weniger hat, Z ein Anion darstellt, m einen numerischen Wert im Bereich von 0,2 bis 2 darstellt und j die Wertigkeit des Anions Z von 1 oder 2 darstellt.

10. Verfahren zur Herstellung eines Polymers nach Anspruch 9, wobei das Verfahren die Umsetzung eines Sulfonierungsmittels mit einer Verbindung der Formel (IV): 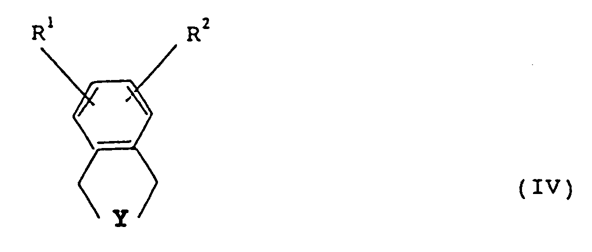 worin R¹ und R² unabhängig die Bedeutung H, lineare oder verzweigte Alkyl- oder Alkoxygruppe mit 1 bis 20 Kohlenstoffatomen, primäre, sekundäre oder tertiäre Aminogruppe, Trihalogenmethylgruppe, Phenylgruppe oder substituierte Phenylgruppe haben, Y die Bedeutung S, O, Se, Te S=O, Se=O, Te=O oder NR³ hat, R³ die Bedeutung H, lineare oder verzweigte Alkylgruppe mit 1 bis 6 Kohlenstoffatomen oder substituierte oder unsubstituierte Arylgruppe hat, wobei die Kette in der Alkylgruppe von R¹, R² oder R³ oder in der Alkoxygruppe von R¹ oder R² ggf. eine Carbonyl-, Ether- oder Amidbindung enthält; und die Oxidation des resultierenden Polymers umfaßt.

11. Verfahren zur Herstellung eines Polymers nach Anspruch 9, wobei das Verfahren die Umsetzung eines Sulfonierungsmittels mit einer Verbindung der Formel (V) umfaßt: 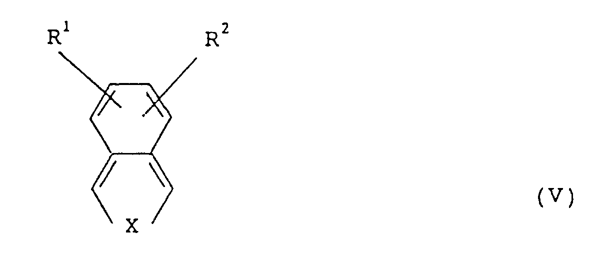 worin R¹ und R² unabhängig die Bedeutung H, lineare oder verzweigte Alkyl- oder Alkoxygruppe mit 1 bis 20 Kohlenstoffatomen, primäre, sekundäre oder tertiäre Aminogruppe, Trihalogenmethylgruppe, Phenylgruppe oder substituierte Phenylgruppe haben, X die Bedeutung S, O, Se, Te oder NR³ hat und R³ die Bedeutung H, lineare oder verzweigte Alkylgruppe mit 1 bis 6 Kohlenstoffatomen oder substituierte oder unsubstituierte Arylgruppe hat, wobei die Kette in der Alkylgruppe von R¹, R² oder R³ oder in der Alkoxygruppe von R¹ oder R² ggf. eine Carbonyl-, Ether- oder Amidbindung enthält.

12. Geformter Artikel, der ein wasserlösliches leitfähiges Polymer nach Anspruch 9 umfaßt.

## Revendications

1. Polymère conducteur soluble dans l'eau ayant la structure chimique représentée par la formule (I) : 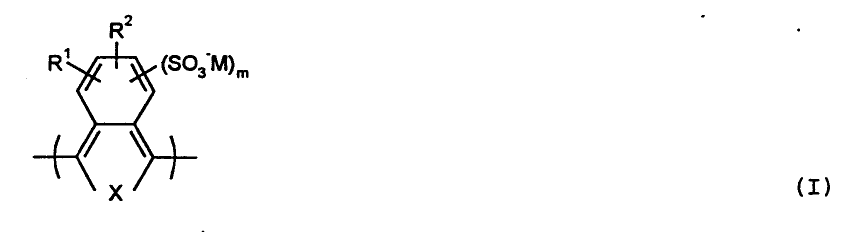 dans laquelle R¹ et R² représentent indépendamment H, un groupe alkyle ou alcoxy linéaire ou ramifié ayant de 1 à 20 atomes de carbone, un groupe amino primaire, secondaire ou tertiaire, un groupe trihalogénométhyle, un groupe phényle ou un groupe phényle substitué, X représente S, O, Se, Te ou NR³, R³ représente H, un groupe alkyle linéaire ou ramifié ayant de 1 à 6 atomes de carbone ou un groupe aryle substitué ou non substitué, et dans laquelle la chaîne dans le groupe alkyle de R¹, R² ou R³ ou dans le groupe alcoxy de R¹ ou R² contient éventuellement une liaison carbonyle, éther ou amide, M représente H⁺, un ion de métal alcalin choisi dans l'ensemble constitué par Na⁺, Li⁺ ou K⁺ ou un cation ammonium quaternaire, et m représente une valeur numérique située dans la plage comprise entre 0,2 et 2.

2. Procédé pour produire un polymère selon la revendication 1 ayant la structure chimique représentée par la formule (I), ce procédé consistant à laisser réagir un agent de sulfonation sur un composé de formule (IV) : 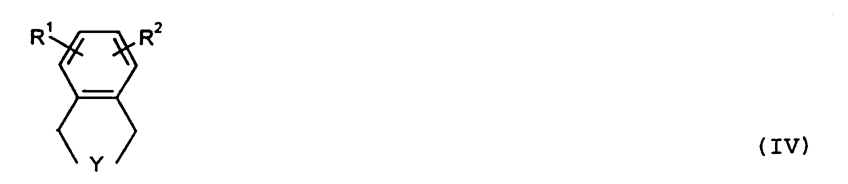 dans laquelle R¹ et R² représentent indépendamment H, un groupe alkyle ou alcoxy linéaire ou ramifié ayant de 1 à 20 atomes de carbone, un groupe amino primaire, secondaire ou tertiaire, un groupe trihalogénométhyle, un groupe phényle ou un groupe phényle substitué, Y représente S, O, Se, Te, Se=0, Te=O ou NR³, R³ représente H, un groupe alkyle linéaire ou ramifié ayant de 1 à 6 atomes de carbone ou un groupe aryle substitué ou non substitué, et dans laquelle la chaîne dans le groupe alkyle de R¹, R² ou R³ ou dans le groupe alcoxy de R¹ ou R² contient éventuellement une liaison carbonyle, éther ou amide.

3. Procédé pour produire un polymère selon la revendication 1 ayant la structure chimique représentée par la formule (I), ce procédé consistant à laisser réagir un agent de sulfonation sur un composé de formule (V) : 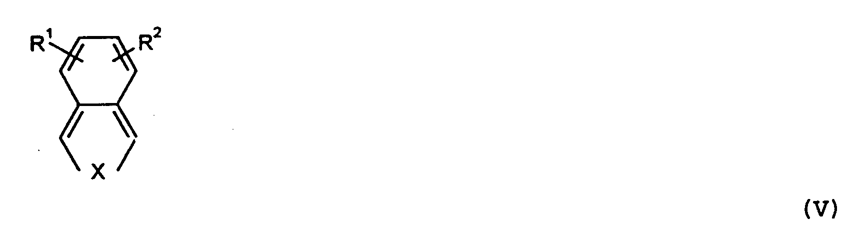 dans laquelle R¹ et R² représentent indépendamment H, un groupe alkyle ou alcoxy linéaire ou ramifié ayant de 1 à 20 atomes de carbone, un groupe amino primaire, secondaire ou tertiaire, un groupe trihalogénométhyle, un groupe phényle ou un groupe phényle substitué, X représente S, O, Se, Te, ou NR³, et R³ représente H, un groupe alkyle linéaire ou ramifié ayant de 1 à 6 atomes de carbone ou un groupe aryle substitué ou non substitué, et dans laquelle la chaîne dans le groupe alkyle de R¹, R² ou R³ ou dans le groupe alcoxy de R¹ ou R² contient éventuellement une liaison carbonyle, éther ou amide.

4. Article façonné comprenant un polymère conducteur soluble dans l'eau selon la revendication 1.

5. Polymère conducteur soluble dans l'eau ayant la structure chimique représentée par la formule (II) : 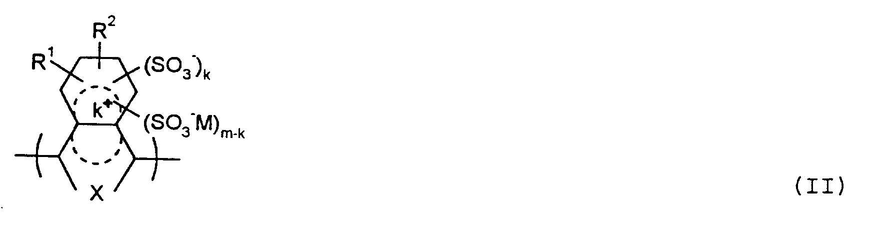 dans laquelle R¹ et R² représentent indépendamment H, un groupe alkyle ou alcoxy linéaire ou ramifié ayant de 1 à 20 atomes de carbone, un groupe amino primaire, secondaire ou tertiaire, un groupe trihalogénométhyle, un groupe phényle ou un groupe phényle substitue, X représente S, O, Se, Te ou NR³, R³ représente H, un groupe alkyle linéaire ou ramifié ayant de 1 à 6 atomes de carbone ou un groupe aryle substitué ou non substitué, et dans laquelle la chaîne dans le groupe alkyle de R¹, R² ou R³ ou dans le groupe alcoxy de R¹ ou R² contient éventuellement une liaison carbonyle, éther ou amide, M représente H⁺, un ion de métal alcalin choisi dans l'ensemble constitué par Na⁺, Li⁺ ou K⁺ ou un cation ammonium quaternaire, m représente une valeur numérique située dans la plage comprise entre 0,2 et 2, et k représente une valeur numérique inférieure à celle de m.

6. Procédé pour produire un polymère selon la revendication 5, ce procédé consistant à laisser réagir un agent de sulfonation sur un composé de formule (IV) : 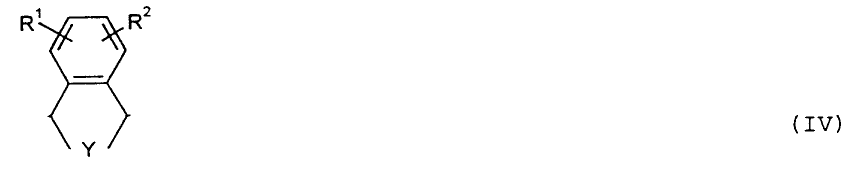 dans laquelle R¹ et R² représentent indépendamment H, un groupe alkyle ou alcoxy linéaire ou ramifié ayant de 1 à 20 atomes de carbone, un groupe amino primaire, secondaire ou tertiaire, un groupe trihalogénométhyle, un groupe phényle ou un groupe phényle substitué, Y représente S, O, Se, Te, Se=0, Te=O ou NR³, R³ représente H, un groupe alkyle linéaire ou ramifié ayant de 1 à 6 atomes de carbone ou un groupe aryle substitué ou non substitué, et dans laquelle la chaîne dans le groupe alkyle de R¹, R² ou R³ ou dans le groupe alcoxy de R¹ ou R² contient éventuellement une liaison carbonyle, éther ou amide,
et à oxyder le polymère résultant.

7. Procédé pour produire un polymère selon la revendication 5, ce procédé consistant à laisser réagir un agent de sulfonation sur un composé de formule (V) : 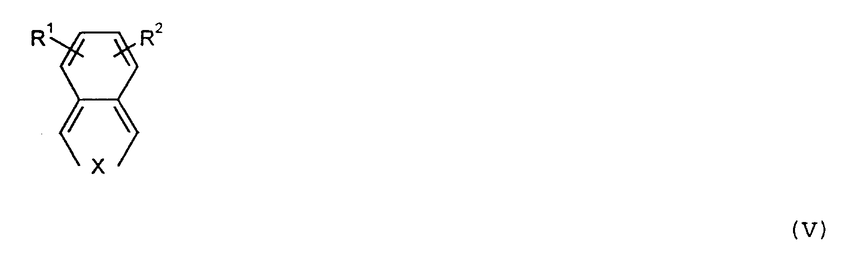 dans laquelle R¹ et R² représentent indépendamment H, un groupe alkyle ou alcoxy linéaire ou ramifié ayant de 1 à 20 atomes de carbone, un groupe amino primaire, secondaire ou tertiaire, un groupe trihalogénométhyle, un groupe phényle ou un groupe phényle substitué, X représente S, O, Se, Te, ou NR³, et R³ représente H, un groupe alkyle linéaire ou ramifié ayant de 1 à 6 atomes de carbone ou un groupe aryle substitué ou non substitué, et dans laquelle la chaîne dans le groupe alkyle de R¹, R² ou R³ ou dans le groupe alcoxy de R¹ ou R² contient éventuellement une liaison carbonyle, éther ou amide.

8. Article façonné comprenant un polymère conducteur soluble dans l'eau selon la revendication 5.

9. Polymère conducteur soluble dans l'eau ayant la structure chimique représentée par la formule (III) : 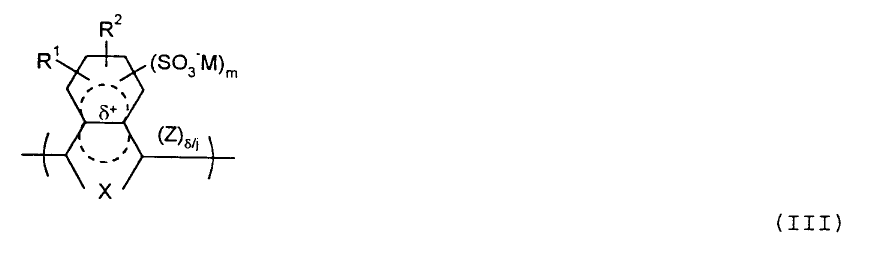 dans laquelle R¹ et R² représentent indépendamment H, un groupe alkyle ou alcoxy linéaire ou ramifié ayant de 1 à 20 atomes de carbone, un groupe amino primaire, secondaire ou tertiaire, un groupe trihalogénométhyle, un groupe phényle ou un groupe phényle substitué, X représente S, O, Se, Te ou NR³, R³ représente H, un groupe alkyle linéaire ou ramifié ayant de 1 à 6 atomes de carbone ou un groupe aryle substitué ou non substitué, et dans laquelle la chaîne dans le groupe alkyle de R¹, R² ou R³ ou dans le groupe alcoxy de R¹ ou R² contient éventuellement une liaison carbonyle, éther ou amide, M représente H⁺, un ion de métal alcalin choisi dans l'ensemble constitué par Na⁺, Li⁺ ou K⁺ ou un cation ammonium quaternaire, δ représente 0,7 ou moins, Z représente un anion, m représente une valeur numérique située dans la plage comprise entre 0,2 et 2, et j représente la valence de l'anion Z, qui est de 1 ou 2.

10. Procédé pour produire un polymère selon la revendication 9, ce procédé consistant à laisser réagir un agent de sulfonation sur un composé de formule (IV) : 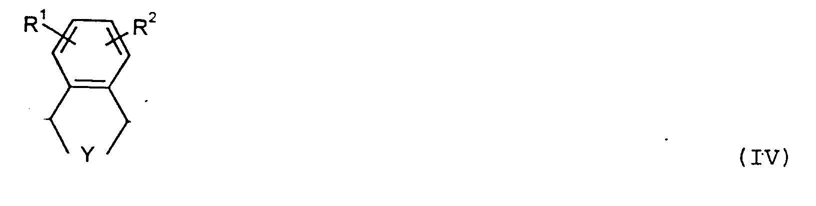 dans laquelle R¹ et R² représentent indépendamment H, un groupe alkyle ou alcoxy linéaire ou ramifié ayant de 1 à 20 atomes de carbone, un groupe amino primaire, secondaire ou tertiaire, un groupe trihalogénométhyle, un groupe phényle ou un groupe phényle substitué, Y représente S, O, Se, Te, S Te=O ou NR³, R³ représente H, un groupe alkyle linéaire ou ramifié ayant de 1 à 6 atomes de carbone ou un groupe aryle substitué ou non substitué, et dans laquelle la chaîne dans le groupe alkyle de R¹, R² ou R³ ou dans le groupe alcoxy de R¹ ou R² contient éventuellement une liaison carbonyle, éther ou amide,
et à oxyder le polymère résultant.

11. Procédé pour produire un polymère selon la revendication 9, ce procédé consistant à laisser réagir un agent de sulfonation sur un composé de formule (V) : 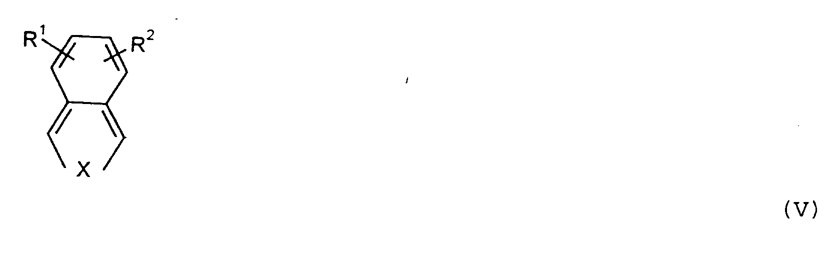 dans laquelle R¹ et R² représentent indépendamment H, un groupe alkyle ou alcoxy linéaire ou ramifié ayant de 1 à 20 atomes de carbone, un groupe amino primaire, secondaire ou tertiaire, un groupe trihalogénométhyle, un groupe phényle ou un groupe phényle substitué, X représente S, O, Se, Te, ou NR³, et R³ représente H, un groupe alkyle linéaire ou ramifié ayant de 1 à 6 atomes de carbone ou un groupe aryle substitué ou non substitué, et dans laquelle la chaîne dans le groupe alkyle de R¹, R² ou R³ ou dans le groupe alcoxy de R¹ ou R² contient éventuellement une liaison carbonyle, éther ou amide.

12. Article façonné comprenant un polymère conducteur soluble dans l'eau selon la revendication 9.
